(19) Europäisches Patentamt / European Patent Office / Office européen des brevets

(11) **EP 3 249 014 A2**

(12) **EUROPÄISCHE PATENTANMELDUNG**

(43) Veröffentlichungstag:
**29.11.2017 Patentblatt 2017/48**

(51) Int Cl.:
***C08L 71/02*** (2006.01)   ***C08L 71/03*** (2006.01)

(21) Anmeldenummer: **17171515.4**

(22) Anmeldetag: **17.05.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **25.05.2016 DE 102016109620**

(71) Anmelder: **Leibniz-Institut für Polymerforschung Dresden e.V.**
**01069 Dresden (DE)**

(72) Erfinder:
• **NATARAJAN, Tamil Selvan**
  **01069 Dresden (DE)**

• **DAS, Amit**
  **01069 Dresden (DE)**
• **STÖCKELHUBER, Klaus Werner**
  **09599 Freiberg (DE)**
• **HONG, Hai Le**
  **06110 Halle (DE)**
• **JURK, René**
  **01987 Schwarzheide (DE)**
• **WIEßNER, Sven**
  **01099 Dresden (DE)**
• **HEINRICH, Gert**
  **30163 Hannover (DE)**

(74) Vertreter: **Rauschenbach, Marion**
**Rauschenbach Patentanwälte**
**Bienertstrasse 15**
**01187 Dresden (DE)**

(54) **ELASTOMERE ZUSAMMENSETZUNG UND VERFAHREN ZU IHRER HERSTELLUNG**

(57)     Die Erfindung bezieht sich auf das Gebiet der Polymerchemie und betrifft eine elastomere Zusammensetzung sowie ein Verfahren zu ihrer Herstellung.

Die Aufgabe der vorliegenden Erfindung besteht in der Angabe einer elastomeren Zusammensetzung, die eine hohe Zugfestigkeit und hohe Härte aufweist, sowie in der Angabe eines Herstellungsverfahrens, das kostengünstig und einfach realisierbar ist.

Die Aufgabe wird durch eine elastomerer Zusammensetzung gelöst, die mindestens ein Basiselastomer, mindestens ein hydrophiles Polymer und mindestens ein anorganisches Salz enthält. Die Aufgabe wird weiterhin gelöst durch ein Verfahren zur Herstellung einer elastomeren Zusammensetzung, bei dem mindestens ein Kautschuk, mindestens ein hydrophiles Polymer und mindestens ein anorganisches Salz gemischt und danach vulkanisiert, anschließend die elastomere Zusammensetzung mindestens teilweise mit Wasser in Kontakt gebracht und danach das Wasser aus der elastomeren Zusammensetzung mindestens teilweise entfernt wird.

Die erfindungsgemäße elastomere Zusammensetzung kann beispielsweise in Fahrzeugen und Maschinen als Dichtung, Öse, Scheibe, Kupplung oder Membran eingesetzt werden.

**Beschreibung**

Die Erfindung bezieht sich auf das Gebiet der Polymerchemie und betrifft eine elastomere Zusammensetzung sowie ein Verfahren zu ihrer Herstellung. Die erfindungsgemäße elastomere Zusammensetzung kann beispielsweise in Fahrzeugen und Maschinen als Dichtung, Öse, Scheibe, Kupplung oder Membran eingesetzt werden.

Werkstoffe und Bauteile aus elastomeren Zusammensetzungen werden in vielen Anwendungsgebieten benötigt und sollen die unterschiedlichsten Eigenschaften aufweisen. Durch den Einsatz von Füllstoffen in elastomeren Werkstoffen können die physikalischen Eigenschaften des Werkstoffes verändert, optimiert und auf den Einsatz in der Praxis angepasst werden.

Am häufigsten wird Ruß oder feindisperses Silica ($SiO_2$) als Füllstoff eingesetzt. Durch die Ausbildung von Sekundarbindungen zwischen den Elastomermolekülen und den Partikeln des Füllstoffs werden die mechanischen Eigenschaften des elastomeren Werkstoffes beeinflusst. Dadurch werden beispielsweise die Festigkeit, der E-Modul oder auch der Abriebwiderstand der elastomeren Werkstoffe wesentlich verbessert, wodurch eine verbesserte Abriebfestigkeit oder auch ein erhöhter Weiterreißwiderstand erreicht wird.

Ebenso bekannt ist der Einsatz von Kohlenstoff-Nanoröhren, Graphen und anderen Nano-Materialien als Füllstoffe, die aufgrund der geringen Partikelgröße gut im elastomeren Werkstoff dispergierbar sind.

Aus US 5 328 949 A ist eine Kautschuk-Zusammensetzung bekannt, die quantitativ mit Kieselsäure verstärkt ist. Dabei umfasst die Kautschuk-Zusammensetzung einen Kautschuk, der mit einer Kombination von Kieselsäure und spezifiziertem Bindemittel verstärkt ist.

Aus WO 2003 016387 A1 ist eine Dienkautschuk-Zusammensetzung bekannt, die aus mindestens einem Dienelastomer hergestellt ist und einen anorganischen verstärkenden Füllstoff und ein Bindemittel aufweist. Der anorganische Füllstoff umfasst mindestens Silica und weist eine spezifische Oberfläche BET zwischen 45 und 400 $m^2$/g, eine spezifische Oberfläche CTAB zwischen 40 und 380 $m^2$/g und eine mittlere Teilchengröße von 20 bis 300 nm auf.

Aus US 7217751 A ist eine Kautschuk-Zusammensetzung, basierend auf einem oder mehreren Dienelastomeren und einem Bindemittel bekannt, bei dem Aluminiumoxid als verstärkender Füllstoff verwendet wird und die eine BET - Oberfläche im Bereich von 30 bis 400 $m^2$/g, eine mittlere Partikelgröße nach Ultraschall-Desagglomeration von kleiner oder gleich 500 nm, sowie einem hohen Anteil an Al-OH oberflächenreaktiven funktionellen Gruppen bei hoher Dispergierbarkeit aufweist.

Weiterhin bekannt aus US 20 110 086 942 A1 ist ein Kautschuk unter Verwendung eines reaktiven Füllstoffs, die den Kautschuk in-situ verstärkt. Diese elastomere Zusammensetzung ist zur Verwendung in einem Bohrloch vorgesehen und umfasst ein Basispolymer, einen verstärkenden reaktiven Füllstoff einschließlich einer Matrix von diskreten Abschnitten eines ersten Materials, die im Basispolymer angeordnet sind, wobei der verstärkende Füllstoff ein Zementpulver oder ein Epoxid sein kann.

Nachteilig bei den bekannten Lösungen ist, dass die elastomeren Zusammensetzungen eine noch zu geringe Zugfestigkeit und Härte aufweisen und die bekannten Herstellungsverfahren kostenintensiv und aufwendig sind.

Die Aufgabe der vorliegenden Erfindung besteht in der Angabe einer elastomeren Zusammensetzung, die eine hohe Zugfestigkeit und hohe Härte aufweist, sowie in der Angabe eines Herstellungsverfahrens, das kostengünstig und einfach realisierbar ist.

Die Aufgabe wird durch die angegebene Erfindung gelöst. Vorteilhafte Ausgestaltungen sind Gegenstand der Unteransprüche, wobei die Erfindung auch Kombinationen der einzelnen abhängigen Ansprüche im Sinne einer und-Verknüpfung mit einschließt, solange sie sich nicht gegenseitig ausschließen.

Die erfindungsgemäße elastomere Zusammensetzung enthält mindestens ein Basiselastomer, mindestens ein hydrophiles Polymer und mindestens ein anorganisches Salz, wobei Hilfsstoffe vorhanden sein können.

Bei der erfindungsgemäßen Zusammensetzung ist es vorteilhaft, wenn das Basiselastomer ein vulkanisierter Naturkautschuk, Acrylnitril-Butadien-Kautschuk (NBR), carboxylierter NBR (XNBR), hydrierter NBR (HNBR), Epichlorhydrin-Ethylenoxid-Kautschuk (GECO), Acryl-Kautschuk (ACM), Ethylen-Propylen-Dien-Monomer-Kautschuk (EPDM), Chloropren-Kautschuk (CR), Butadien-Kautschuk (BR), Styrol-Butadien-Kautschuk (SBR), Poly-Urethan-Kautschuk (PU), Fluorkautschuk (FKM) und/oder Silikon-Kautschuk (VMQ) ist.

Ebenfalls von Vorteil ist, wenn das hydrophile Polymer Alkylenoxid-Copolymer, Polyethylenoxid-Co-Alkylenoxid-Copolymer, Polyethylenoxid-Alkylenoxid-Copolymer, Natriumpolyacrylat, Polyvinylalkohol, Polyacrylsäure, Polyacrylamid, Carboxymethylcellulose, Polyacrylsäurecoacrylamid, Polyhydroxyethylmethacrylat, Ethylenoxid-Propylenoxid-Allylglycidylether, Polycaprolactone-b-Polyethylenoxid-Copolymer, Polystyren-Ethylenoxid-Block-Copolymer, Polyepichlorhydrin-Co-Ethylenoxid, Polyethylene-Co-Propylenoxid, Polyether-Polyol, Polyethylenoxid-Polypropylenoxid-Polyethylenoxid-Triblock-Copolymer, Polyphosphazen-Polyethylenoxid-Copolymer, Polylacetide-Block-Polyethylenoxid-Copolymer, Polyethylenoxid-Block-Polyaminosäure, Propylenglycol-Ethylenglycol-Polycondensat, Polyethylenoxid-Co-Propylenoxid-Co-Butylenoxid und/oder ein Harz ist.

Das Harz kann vorteilhaft ein thermoplastisches Polymerharz, Epoxidharz, Polyesterharz, Polyurethanharz, Polyacrylatharz, Melaminharz, Phenolformaldehydharz, Polyacrylonitrilharz, Polyasparticharz, Polyureaharz, Polyvinylbutyralharz, Ureaformaldehydharz, Ebonitharz, Cyanacrylatharz und/oder Vinylesterharz sein.

Vorteilhafterweise ist bei der elastomeren Zusammensetzung das hydrophile Polymer mit 30 - 60 phr vorhanden.

Ebenfalls vorteilhaft ist es, wenn das anorganische Salz Calciumsulfat ($CaSo_4$), Calciumsulfat-Dihydrat ($Ca[SO_4] \cdot 2H_2O$), Calciumsulfat-Hemihydrat ($Ca[SO_4] \cdot \frac{1}{4}H_2O$), Calciumhydrogenphosphat ($CaHPO_4$) und/oder Calcium-hydrogenphosphat-Dihydrat ($CaHPO_4 \cdot 2H_2O$) ist und mit 30 - 50 phr vorhanden ist.

Vorteilhafterweise sind als Hilfsstoffe Vernetzungsmittel, Kompatibilitätsmittel, Aktivatoren, Beschleuniger, Verzögerer, Antioxidantien, Weichmacher und/oder Ozonschutzmittel vorhanden.

Als Vernetzungsmittel sind vorteilhafterweise Schwefel, Peroxide und/oder Amine mit 0,5 - 6 phr vorhanden.

Als Kompatibilitätsmittel sind vorteilhafterweise Polyglykol, Methacrylat und/oder Dialkyl-Diether-Glutarat mit 10 - 30 phr vorhanden.

Besonders vorteilhaft ist es, wenn weitere Vernetzungsstellen von ungesättigten Verbindungen mit oder ohne funktionelle Gruppen und/oder gesättigte Verbindungen mit funktionellen Gruppen vorhanden sind. Dabei sind vorteilhafterweise die funktionellen Gruppen Carboxylgruppen, Hydroxylgruppen oder Aminogruppen.

Mit dem erfindungsgemäßen Verfahren zur Herstellung einer elastomeren Zusammensetzung werden mindestens ein Kautschuk, mindestens ein hydrophiles Polymer und mindestens ein anorganisches Salz gemischt und danach vulkanisiert, anschließend die elastomere Zusammensetzung mindestens teilweise mit Wasser in Kontakt gebracht und danach das Wasser aus der elastomeren Zusammensetzung mindestens teilweise entfernt.

Vorteilhafterweise wird bei dem erfindungsgemäßen Verfahren als Kautschuk Naturkautschuk, Acrylnitril-Butadien-Kautschuk (NBR), carboxylierter NBR (XNBR), hydrierter NBR (HNBR), Epichlorhydrin-Ethylenoxid-Kautschuk (GECO), Acryl-Kautschuk, Ethylen-Propylen-Dien-Monomer-Kautschuk (EPDM), Chloropren-Kautschuk (CR), Butadien-Kautschuk (BR), Styrol-Butadien-Kautschuk (SBR), Poly-Urethan-Kautschuk (PU), Fluorkautschuk und/oder Silikon-Kautschuk eingesetzt.

Ebenfalls vorteilhaft ist es, wenn als hydrophiles Polymer Natriumpolyacrylat, Polyvinylalkohol, Polyacrylsäure, Polyacrylamid, Carboxymethylcellulose, Polyacrylsäurecoacrylamid, Polyhydroxyethylmethacrylat, Ethylenoxid-Propylenoxid-Allylglycidylether (GEPO) und/oder ein Harz eingesetzt wird.

Außerdem ist es vorteilhaft, wenn als anorganisches Salz Calciumsulfat ($CaSo_4$), Calciumsulfat-Dihydrat ($Ca[SO_4] \cdot 2H_2O$), Calciumsulfat-Hemihydrat ($Ca[SO_4] \cdot \frac{1}{4}H_2O$), Calciumhydrogenphosphat ($CaHPO_4$) und/oder Calcium-hydrogenphosphat-Dihydrat ($CaHPO_4 \cdot 2H_2O$) eingesetzt wird.

Auch ist es vorteilhaft, wenn Hilfsstoffe vor der Vulkanisation zugegeben werden.

Vorteilhaft ist es auch, wenn der Kautschuk, das hydrophile Polymer und das anorganische Salz homogen gemischt und nachfolgend bei Temperaturen von 140°C - 180°C für 6 - 20 Minuten vulkanisiert wird.

Besonders vorteilhaft ist, wenn die elastomere Zusammensetzung vollständig mit Wasser in Kontakt gebracht wird.

Ebenfalls vorteilhafterweise wird die elastomere Zusammensetzung für 2 - 6 h mit Wasser in Kontakt gebracht, wobei besonders vorteilhaft die elastomere Zusammensetzung mit deionisiertem oder destilliertem Wasser in Kontakt gebracht wird.

Vorteilhafterweise wird das aufgenommene Wasser bei 50 °C - 60 °C für 3 - 4 h oder bei Raumtemperatur für 24 - 48 h aus der elastomeren Zusammensetzung entfernt.

Von besonderem Vorteil ist, wenn nach der Entfernung des aufgenommenen Wassers die elastomere Zusammensetzung einer Wärmebehandlung bei 160 °C bis 220 °C unterzogen wird.

Mit der erfindungsgemäßen Lösung ist es erstmals möglich, eine elastomere Zusammensetzung bereitzustellen, die eine hohe Zugfestigkeit und hohe Härte aufweist. Daneben ist es mit der erfindungsgemäßen Lösung möglich, die Eigenschaften der elastomeren Zusammensetzung gezielt auf den gewünschten Anwendungsbereich einzustellen.

Erreicht wird dies durch eine elastomere Zusammensetzung, die mindestens ein Basiselastomer, mindestens ein hydrophiles Polymer und mindestens ein anorganisches Salz enthält.

Zur Herstellung des Basiselastomers können erfindungsgemäß Naturkautschuk oder Synthesekautschuke, wie beispielsweise Acrylnitril-Butadien-Kautschuk (NBR), carboxylierter NBR (XNBR), hydrierter NBR (HNBR), Epichlorhydrin-Ethylenoxid-Kautschuk (GECO), Acryl-Kautschuk (ACM), Ethylen-Propylen-Dien-Monomer-Kautschuk (EPDM), Chloropren-Kautschuk (CR), Butadien-Kautschuk (BR), Styrol-Butadien-Kautschuk (SBR), Poly-Urethan-Kautschuk (PU), Fluorkautschuk (FKM) oder Silikon-Kautschuk (VMQ) eingesetzt werden. Das Basiselastomer liegt nach der Vulkanisierung der Kautschuke vor. Das Basiselastomer kann dabei aus einem einzigen Kautschuk oder aus einem Blend von zwei oder mehreren Kautschuken hergestellt worden sein.

Besonders vorteilhaft ist es, wenn polare Kautschuke wie beispielsweise Epichlorhydrin-Ethylenoxid-Kautschuk (GECO), Acryl-Kautschuk (ACM), carboxylierter NBR (XNBR) und/oder Polyurethan-Kautschuk (PU) eingesetzt werden. Diese Kautschuke weisen aufgrund ihrer Polarität eine bessere Kompatibilität mit dem hydrophilen Polymer und dem anorganischen Salz auf.

Des Weiteren enthält die elastomere Zusammensetzung mindestens ein hydrophiles Polymer. Bevorzugt sind als hydrophile Polymere Alkylenoxid-Copolymer, Polyethylenoxid-Co-Alkylenoxid-Copolymer, Polyethylenoxid-Alkylenoxid-Copolymer, Natriumpolyacrylat, Polyvinylalkohol, Polyacrylsäure, Polyacrylamid, Carboxymethylcellulose, Polyacrylsäurecoacrylamid, Polyhydroxyethylmethacrylat, Ethylenoxid-Propylenoxid-Allylglycidylether, Polycaprolactone-Polyethylenoxid-Copolymer, Polystyren-Ethylenoxid-Block-Copolymer, Polyepichlorhydrin-Co-Ethylenoxid, Polyethylene-Co-Propylenoxid, Polyether-Polyol, Polyethylenoxid-Polypropylenoxid-Polyethylenoxid-Triblock-Copolymer, Polyphosphazen-Polyethylenoxid-Copolymer, Polylacetide-Block-Polyethylenoxid-Copolymer, Polyethylenoxid-Block-Polyaminosäure, Propylenglycol-Ethylenglycol-Polycondensat, Polyethylenoxid-Co-Propylenoxid-Co-Butylenoxid und/oder ein Harz vorhanden.

Als Harz ist bevorzugt ein thermoplastisches Polymerharz, Epoxidharz, Polyesterharz, Polyurethanharz, Polyacrylatharz, Melaminharz, Phenolformaldehydharz, Polyacrylonitrilharz, Polyaspartic-Harz, Polyureaharz, Polyvinylbutyralharz, Ureaformaldehydharz, Ebonitharz, Cyanacrylatharz und/oder Vinylesterharz vorhanden.

Es können ein, zwei oder auch mehrere hydrophile Polymere in der elastomeren Zusammensetzung vorhanden sein. Vorteilhafterweise liegen 30 bis 60 phr des hydrophilen Polymers vor.

Durch die erfindungsgemäße Lösung ist es möglich, dass die elastomere Zusammensetzung über das hydrophile Polymer Wasser aufnehmen kann. Der Grad der Wasseraufnahme $W_A$ (in %) kann durch die Formel

$$W_A = [(M_S - M_O) / M_O] \cdot 100$$

ermittelt werden, wobei $M_O$ die Masse der elastomeren Zusammensetzung vor der Wasseraufnahme und $M_S$ die Masse der elastomeren Zusammensetzung nach der Wasseraufnahme ist.

Der Grad der Wasseraufnahme ist erfindungsgemäß besonders wichtig, da dadurch insbesondere die verstärkende Wirkung des in der elastomeren Zusammensetzung vorhandenen anorganischen Salzes beeinflusst wird. Das anorganische Salz ist beispielsweise Calciumsulfat ($CaSo_4$), Calciumsulfat-Dihydrat ($Ca[SO_4] \cdot 2H_2O$), Calciumsulfat-Hemihydrat ($Ca[SO_4] \cdot \frac{1}{4}H_2O$), Calciumhydrogenphosphat ($CaHPO_4$) und/oder Calciumhydrogenphosphat-Dihydrat ($CaHPO_4 \cdot 2H_2O$).

Das anorganische Salz ist in der Lage, mit dem über das hydrophile Polymer aufgenommenen Wasser zu reagieren, wobei während der Reaktion mit Wasser eine Hydratation und Kristallisation des anorganischen Salzes realisiert wird. Der Vorgang der Hydratation und der anschließenden Kristallisation des anorganischen Salzes wird als Einstellen bezeichnet. Der Vorgang der Hydratation bezeichnet dabei die Anlagerung von Wassermolekülen an gelöste Ionen (Wikipedia, Suchbegriff "Hydratation"). Dabei werden während der Hydratation des anorganischen Salzes Ionen gebildet, die anschließend während des Entfernens des Wassers, also der Trocknung der elastomeren Zusammensetzung, bei der Kristallisation Hydrate ausbilden. Diese Hydrate der anorganischen Salze zeigen eine höhere Druckfestigkeit als die amorphen Kristalle des anorganischen Salzes vor der Wasserbehandlung. Durch das Einstellen des anorganischen Salzes wird erreicht, dass besonders feste und starre Kristallgitter entstehen, wodurch eine besonders gute Verstärkung der elastomeren Zusammensetzung erreicht wird.

Während des Einstellens weist das anorganische Salz morphologische Veränderungen der kristallinen Strukturen auf. So liegen die Kristalle des anorganischen Salzes vor der Hydratation und Kristallisation in thrombozytischen Strukturen vor. Nach dem Einstellen des anorganischen Salzes liegen die Kristalle in Form von Stangen und Nadeln vor. Das anorganische Salz liegt nach dem Einstellen in Form von Nanokristalliten vor, wodurch eine besonders gute Dispergierung des anorganischen Salzes mit dem Basiselastomer und dem hydrophilen Polymer erreicht wird.

Um eine gleichmäßige Verstärkung der gesamten elastomeren Zusammensetzung zu erreichen, ist es wichtig, dass das anorganische Salz sowie das hydrophile Polymer in der elastomeren Zusammensetzung homogen verteilt vorliegen. Dadurch wird auch erreicht, dass das anorganische Salz mit dem über das hydrophile Polymer aufgenommenen Wasser möglichst vollständig in Kontakt kommt. Neben dem anorganischen Salz können auch weitere Hilfsstoffe und/oder Füllstoffe vorhanden.

Die elastomere Zusammensetzung enthält als Hilfsstoffe beispielsweise Vernetzungsmittel, wie Schwefel, Peroxide und/oder Amine, wobei die Vernetzungsmittel mit 0,5 - 6 phr vorliegen.

Andere Hilfsstoffe können beispielsweise Kompatibilitätsmittel, Aktivatoren, Beschleuniger, Verzögerer, Antioxidantien, Weichmacher, weitere Füllstoffe und/oder Ozonschutzmittel sein.

Kompatibilitätsmittel sind vor allem dann vorhanden, wenn zwei oder mehrere hydrophile Polymere eingesetzt werden, die nur eingeschränkt kompatibel sind. Die Kompatibilität hängt dabei vom Grad der Polarität des gewählten Basiselastomers sowie dem Verhältnis des ausgewählten Basiselastomers zum ausgewählten hydrophilen Polymer ab. So kann das Fehlen eines Kompatibilitätsmittels in diesem System zur Phasentrennung führen und die Eigenschaften der elastomeren Zusammensetzung wesentlich beeinflussen.

Mit der Zugabe mindestens eines Kompatibilitätsmittels werden diese Nachteile beseitigt, wobei das Kompatibilitätsmittel polare und unpolare molekulare Gruppen aufweisen kann. Bevorzugt ist das Kompatibilitätsmittel Polyglykol, Methacrylat und/oder Dialkyl-Diether-Glutarat und liegt mit 10 - 30 phr vor.

Mit Hilfe von Beschleunigern und/oder Verzögerern kann die Geschwindigkeit der Einstellung des anorganischen Salzes beeinflusst werden. Vorteilhafterweise sind als Beschleuniger anorganische Säuren oder starke oder schwache Basen, wie beispielsweise $K_2SO_4$ oder $Ca(OH)_2$, vorhanden. Als Verzögerer sind vorteilhafterweise schwache organische Säuren und ihre Salze, wie beispielsweise Zitronensäure, Apfelsäure oder Adipinsäure, oder starke Basen vorhanden.

Außerdem kann die elastomere Zusammensetzung zusätzlich Antioxidantien und/oder Weichmacher aufweisen.

Als Antioxidantien sind vorteilhaft Verbindungen vorhanden, die der Amino-Gruppe, Hydrochinon-Gruppe oder Phenol-Gruppe angehören. Bevorzugt liegen dabei die Antioxidantien mit 1 - 5 phr in der elastomeren Zusammensetzung vor.

Als Weichmacher sind vorteilhaft aromatische, paraffin- und/oder naphthenhaltige Öle vorhanden. Derartige Hilfsstoffe unterstützen beispielsweise das Herstellungsverfahren und liegen vorteilhafterweise mit 1 - 5 phr vor.

Außerdem ist es vorteilhaft, wenn in der elastomeren Zusammensetzung weitere Vernetzungsstellen an den Polymerketten vorliegen. Diese Vernetzungsstellen können ungesättigte Verbindungen mit oder ohne funktionelle Gruppen und/oder gesättigte Verbindungen mit funktionellen Gruppen sein. Die funktionellen Gruppen können Carboxylgruppen, Hydroxylgruppen oder Aminogruppen sein. Dadurch wird erreicht, dass die Vernetzung zwischen dem mindestens einen Basiselastomer und dem mindestens einen hydrophilen Polymer zusätzlich verbessert und die elastomere Zusammensetzung nach der Absorbierung von Wasser zusätzlich stabilisiert wird.

Mit dem erfindungsgemäßen Verfahren werden erstmals elastomere Zusammensetzungen mit einem kostengünstigen und einfachen Verfahren hergestellt, die eine hohe Zugfestigkeit und hohe Härte aufweisen.

Erreicht wird dies, indem mindestens ein Kautschuk, mindestens ein hydrophiles Polymer und mindestens ein anorganisches Salz gemischt und danach vulkanisiert werden, anschließend die elastomere Zusammensetzung mindestens teilweise mit Wasser in Kontakt gebracht und danach das Wasser aus der elastomeren Zusammensetzung mindestens teilweise entfernt wird.

Im Rahmen der vorliegenden Erfindung sollen unter Kautschuk alle unvulkanisierten elastomeren Polymere verstanden werden und unter Elastomeren alle aus Kautschuken vulkanisierten elastomeren Polymere.

Im ersten Verfahrensschritt wird der mindestens eine Kautschuk mit dem mindestens einen hydrophilen Polymer und dem mindestens einen anorganischen Salz gemischt. Dabei sollte der Mischvorgang solange durchgeführt werden, bis das hydrophile Polymer und das anorganische Salz möglichst homogen verteilt im Kautschuk vorliegen. Während des Mischvorganges können Hilfsstoffe zugegeben und eingemischt werden, so dass diese ebenfalls homogen verteilt in der elastomeren Zusammensetzung vorliegen.

Nach dem Mischen und dem anschließenden Vulkanisieren wird die elastomere Zusammensetzung mindestens teilweise mit Wasser in Kontakt gebracht. Die Kontaktierung mit Wasser erfolgt beispielsweise dadurch, dass die elastomere Zusammensetzung teilweise oder vollständig in Wasser eingetaucht wird.

Der Grad der Wasseraufnahme ist unter Anderem vom eingesetzten hydrophilen Polymer sowie der Dauer und Art der Kontaktierung mit dem Wasser abhängig. So ist es möglich, die elastomere Zusammensetzung nur teilweise mit Wasser zu kontaktieren. Dadurch wird erreicht, dass die elastomere Zusammensetzung nur teilweise in einigen räumlichen Bereichen Wasser aufnimmt.

Die elastomere Zusammensetzung kann aber auch vollständig mit Wasser in Kontakt gebracht werden. In diesem Fall ist es besonders wichtig, dass das hydrophile Polymer homogen verteilt in der elastomeren Zusammensetzung vorliegt. Dadurch wird erreicht, dass das anorganische Salz vollständig mit dem aufgenommenen Wasser in Kontakt kommen kann.

Vorteilhafterweise werden durch die Kontaktierung der elastomeren Zusammensetzung mit Wasser mindestens 20 % und maximal 125 % de-ionisiertes oder destilliertes Wasser, bezogen auf die Masse der elastomeren Zusammensetzung, durch das hydrophile Polymer aufgenommen. Noch vorteilhafter werden 100 % Wasser, bezogen auf die Masse der elastomeren Zusammensetzung, durch das hydrophile Polymer aufgenommen.

Nach der Kontaktierung wird das Wasser aus der elastomeren Zusammensetzung entfernt. Dies erfolgt mittels Trocknung, die möglichst vollständig sein soll. Unter vollständiger Trocknung soll im Rahmen der Erfindung verstanden werden, dass der Grad der Wasseraufnahme $W_A$ nach der Trocknung < 5 % beträgt.

Die Dauer der Trocknung ist unter anderem vom realisierten Grad der Wasseraufnahme und der vorliegenden Umgebungstemperatur während der Trocknung abhängig. Vorteilhafterweise kann die Trocknung bei Raumtemperatur (22 °C) für 24 bis 48 Stunden realisiert werden. Möglich ist aber auch, dass die Trocknung bei 50 °C bis 60 °C für 3 bis 4 Stunden realisiert wird.

Ein weiterer Vorteil des erfindungsgemäßen Verfahrens ist, dass der Vorgang des Einstellens des anorganischen Salzes reversibel ist und die damit verbundene Verstärkung der elastomeren Zusammensetzung rückgängig gemacht werden kann. Dies wird dadurch erreicht, in dem die verstärkte elastomere Zusammensetzung nach dem Einstellen des anorganischen Salzes einer zusätzlichen Wärmebehandlung zwischen 120 °C bis 220 °C ausgesetzt wird. Dabei werden die zuvor durch das Einstellen realisierten morphologischen Veränderungen des anorganischen Salzes wieder zurückgeführt und der ursprüngliche amorphe Zustand des anorganischen Salzes wiederhergestellt. Damit ist es möglich, eine mechanisch-adaptive elastomere Zusammensetzungen bereitzustellen, deren Eigenschaften auf die wechselnden Anwendungsbereiche beliebig oft angepasst werden können.

Nachfolgend wird die Erfindung anhand von zwei Ausführungsbeispielen näher erläutert.

Ausführungsbeispiel 1

Eine elastomere Zusammensetzung wurde hergestellt, indem der Kautschuk, das hydrophile Polymer sowie das anorganische Salz gemäß Tabelle 1 in einem Zweiwalzenmischer für 15 min bei 60 °C gemischt wurden.

Tabelle 1

| Bestandteil | Auswahl | phr |
|---|---|---|
| Kautschuk | Epichlorhydrin-Ethylenoxid-Kautschuk (Hydrin T3108)-(GECO) | 50 |
| Hydrophiles Polymer | Ethylenoxid-Propylenoxid-Allyl-Glycidyl-Ether (Zeospan 8030) (GEPO) | 50 |
| Anorganisches Salz | Kalziumsulfat ($CaSO_4$) | 50 |
| Aktivator | Zinkoxid | 3 |
| Beschleuniger | Stearinsäure | 2 |
| Beschleuniger | Tetramethylthiuramdisulfid (TMTD) | 2.5 |
| Beschleuniger | Mercaptobenzothiazol (MBT) | 1 |
| Vernetzungsmittel | Schwefel | 1 |

Anschließend wurden der Aktivator, die Beschleuniger und das Vernetzungsmittel der Mischung zugegeben und die Mischung anschließend in einer Heißpresse bei 160 °C für 10 min vulkanisiert und danach für 60 min auf Raumtemperatur (22 °C) abgekühlt. Die so hergestellte Probe wird anschließend vollständig in destilliertes Wasser eingetaucht und nach 2 h wieder aus dem destillierten Wasser entfernt. Anschließend wird die wasserbehandelte elastomere Zusammensetzung für 48 h bei Raumtemperatur getrocknet.

Die Ergebnisse der anschließend durchgeführten mechanischen Analyse der ungefüllten Zusammensetzung sowie der $CaSO_4$-gefüllten und der wasserbehandelten $CaSO_4$-gefüllten elastomeren Zusammensetzung sind in Tabelle 2 dargestellt.

Tabelle 2

| Probe | Zugfestigkeit (MPa) | Dehnung bis Bruch (%) | E-Modul bei 60 °C (MPa) | Härte A |
|---|---|---|---|---|
| GECO-GEPO ohne $CaSO_4$ | 2.16 | 180 | 7 | 45 |
| GECO-GEPO mit $CaSO_4$ ohne Wasserbehandlung | 2.75 | 260 | 9 | 51 |
| GECO-GEPO mit $CaSO_4$ mit Wasserbehandlung nach 2 Stunden | 4.52 | 272 | 57 | 78 |

Die Ergebnisse zeigen deutlich verbesserte mechanische Eigenschaften, insbesondere der Zugfestigkeit und Härte der mit dem anorganischen Salz verstärkten elastomeren Zusammensetzung nach der Wasserbehandlung. Mit XRD-Untersuchungen wurde nachgewiesen, dass die amorphen $CaSO_4$-Kristalle durch die Wasserbehandlung der elastomeren Zusammensetzung in kristalline $CaSO_4$-Kristalle umgewandelt werden. Eine Transmissionselektronenmikroskopie zeigte die Bildung von nanoskaligen und hochausgebildeten Salzkristallen nach der Wasserbehandlung. Die plattenförmige Morphologie der $CaSO_4$-Kristalle wurde zu Nanostäbchen und Nanonadeln umgewandelt.

Ausführungsbeispiel 2

Die durch die Wasserbehandlung verstärkte elastomere Zusammensetzung gemäß Ausführungsbeispiel 1 wird einer Wärmebehandlung bei einer Temperatur von 200 °C für 60 Minuten unterzogen und anschließend bei Raumtemperatur (22 °C) für 3 h abgekühlt. Anschließend werden an der elastomeren Zusammensetzung dynamisch-mechanische Analysen und Festigkeitsuntersuchungen durchgeführt. Die Ergebnisse der Untersuchungen sind in Tabelle 3 aufgeführt und zeigen, dass aufgrund der Wärmebehandlung der verstärkten elastomeren Zusammensetzung der ursprüngliche morphologische Zustand des anorganischen Salzes wieder hergestellt ist.

Tabelle 3

| Probe | E-Modul bei 60 °C (MPa) | Härte A |
|---|---|---|
| GECO-GEPO-CaSO$_4$ ohne Wasserbehandlung | 9 | 51 |
| GECO-GEPO-CaSO$_4$ nach 2 h Wasserbehandlung | 57 | 78 |
| GECO-GEPO-CaSO$_4$ nach 2 h Wasserbehandlung, Trocknung und Wärmebehandlung bei 200 °C für 1 h | 10 | 53 |

**Patentansprüche**

1.  Elastomere Zusammensetzung, mindestens enthaltend mindestens ein Basiselastomer, mindestens ein hydrophiles Polymer und mindestens ein anorganisches Salz, wobei Hilfsstoffe vorhanden sein können.

2.  Elastomere Zusammensetzung nach Anspruch 1, bei der das Basiselastomer ein vulkanisierter Naturkautschuk, Acrylnitril-Butadien-Kautschuk (NBR), carboxylierter NBR (XNBR), hydrierter NBR (HNBR), Epichlorhydrin-Ethylenoxid-Kautschuk (GECO), Acryl-Kautschuk (ACM), Ethylen-Propylen-Dien-Monomer-Kautschuk (EPDM), Chloropren-Kautschuk (CR), Butadien-Kautschuk (BR), Styrol-Butadien-Kautschuk (SBR), Poly-Urethan-Kautschuk (PU), Fluorkautschuk (FKM) und/oder Silikon-Kautschuk (VMQ) ist.

3.  Elastomere Zusammensetzung nach Anspruch 1, bei der das hydrophile Polymer Alkylenoxid-Copolymer, Polyethylenoxid-Co-Alkylenoxid-Copolymer, Polyethylenoxid-Alkylenoxid-Copolymer, Natriumpolyacrylat, Polyvinylalkohol, Polyacrylsäure, Polyacrylamid, Carboxymethylcellulose, Polyacrylsäurecoacrylamid, Polyhydroxyethylmethacrylat, Ethylenoxid-Propylenoxid-Allylglycidylether, Polycaprolactone-b-Polyethylenoxid-Copolymer, Polystyren-Ethylenoxid-Block-Copolymer, Polyepichlorhydrin-Co-Ethylenoxid, Polyethylene-Co-Propylenoxid, Polyether-Polyol, Polyethylenoxid-Polypropylenoxid-Polyethylenoxid-Triblock-Copolymer, Polyphosphazen-Polyethylenoxid-Copolymer, Polylacetide-Block-Polyethylenoxid-Copolymer, Polyethylenoxid-Block-Polyaminosäure, Propylenglycol-Ethylenglycol-Polycondensat, Polyethylenoxid-Co-Propylenoxid-Co-Butylenoxid und/oder ein Harz ist, wobei vorteilhafterweise das Harz thermoplastisches Polymerharz, Epoxidharz, Polyesterharz, Polyurethanharz, Polyacrylatharz, Melaminharz, Phenolformaldehydharz, Polyacrylonitrilharz, Polyasparticharz, Polyureaharz, Polyvinylbutyralharz, Ureaformaldehydharz, Ebonitharz, Cyanacrylatharz und/oder Vinylesterharz ist, wobei vorteilhafterweise das hydrophile Polymer mit 30 - 60 phr vorhanden ist.

4.  Elastomere Zusammensetzung nach Anspruch 1, bei der das anorganische Salz Calciumsulfat (CaSo$_4$), Calciumsulfat-Dihydrat (Ca[SO$_4$]·2H$_2$O), Calciumsulfat-Hemihydrat (Ca[SO$_4$]·¼H$_2$O), Calciumhydrogenphosphat (CaHPO$_4$) und/oder Calciumhydrogenphosphat-Dihydrat (CaHPO$_4$·2H$_2$O) ist, wobei vorteilhafterweise das anorganische Salz mit 30 - 50 phr vorhanden ist.

5.  Elastomere Zusammensetzung nach Anspruch 1, bei der als Hilfsstoffe Vernetzungsmittel, Kompatibilitätsmittel, Aktivatoren, Beschleuniger, Verzögerer, Antioxidantien, Weichmacher und/oder Ozonschutzmittel vorhanden sind, wobei vorteilhafterweise als Vernetzungsmittel Schwefel, Peroxide und/oder Amine mit 0,5 - 6 phr vorhanden sind und vorteilhafterweise als Kompatibilitätsmittel Polyglykol, Methacrylat und/oder Dialkyl-Diether-Glutarat mit 10 - 30 phr vorhanden sind.

6.  Elastomere Zusammensetzung nach Anspruch 1, bei der weitere Vernetzungsstellen von ungesättigten Verbindungen mit oder ohne funktionelle Gruppen und/oder gesättigte Verbindungen mit funktionellen Gruppen vorhanden sind, wobei vorteilhafterweise die funktionellen Gruppen Carboxylgruppen, Hydroxylgruppen oder Aminogruppen sind.

7.  Verfahren zur Herstellung einer elastomeren Zusammensetzung, bei dem mindestens ein Kautschuk, mindestens ein hydrophiles Polymer und mindestens ein anorganisches Salz gemischt und danach vulkanisiert werden, anschließend die elastomere Zusammensetzung mindestens teilweise mit Wasser in Kontakt gebracht und danach das Wasser aus der elastomeren Zusammensetzung mindestens teilweise entfernt wird.

8. Verfahren nach Anspruch 7, bei dem als Kautschuk Naturkautschuk, Acrylnitril-Butadien-Kautschuk (NBR), carboxylierter NBR (XNBR), hydrierter NBR (HNBR), Epichlorhydrin-Ethylenoxid-Kautschuk (GECO), Acryl-Kautschuk, Ethylen-Propylen-Dien-Monomer-Kautschuk (EPDM), Chloropren-Kautschuk (CR), Butadien-Kautschuk (BR), Styrol-Butadien-Kautschuk (SBR), Poly-Urethan-Kautschuk (PU), Fluorkautschuk und/oder Silikon-Kautschuk eingesetzt wird.

9. Verfahren nach Anspruch 7, bei dem als hydrophiles Polymer Natriumpolyacrylat, Polyvinylalkohol, Polyacrylsäure, Polyacrylamid, Carboxymethylcellulose, Polyacrylsäurecoacrylamid, Polyhydroxyethylmethacrylat, Ethylenoxid-Propylenoxid-Allylglycidylether (GEPO) und/oder ein Harz eingesetzt wird.

10. Verfahren nach Anspruch 7, bei dem als anorganisches Salz Calciumsulfat ($CaSo_4$), Calciumsulfat-Dihydrat ($Ca[SO_4]\cdot2H_2O$), Calciumsulfat-Hemihydrat ($Ca[SO_4]\cdot\frac{1}{4}H_2O$), Calciumhydrogenphosphat ($CaHPO_4$) und/oder Calciumhydrogenphosphat-Dihydrat ($CaHPO_4\cdot2H_2O$) eingesetzt wird.

11. Verfahren nach Anspruch 7, bei dem Hilfsstoffe vor der Vulkanisation zugegeben werden.

12. Verfahren nach Anspruch 7, bei dem der Kautschuk, das hydrophile Polymer und das anorganische Salz homogen gemischt und nachfolgend bei Temperaturen von 140 °C - 180 °C für 6 - 20 Minuten vulkanisiert wird.

13. Verfahren nach Anspruch 7, bei dem die elastomere Zusammensetzung vollständig mit Wasser in Kontakt gebracht wird, wobei vorteilhafterweise die elastomere Zusammensetzung für 2 - 6 h mit Wasser in Kontakt gebracht wird.

14. Verfahren nach Anspruch 7, bei dem die elastomere Zusammensetzung mit deionisiertem oder destilliertem Wasser in Kontakt gebracht wird.

15. Verfahren nach Anspruch 7, bei dem das aufgenommene Wasser bei 50 °C - 60 °C für 3 - 4 h oder bei Raumtemperatur für 24 - 48 h aus der elastomeren Zusammensetzung entfernt wird.

16. Verfahren nach Anspruch 7, bei dem nach der Entfernung des aufgenommenen Wassers die elastomere Zusammensetzung einer Wärmebehandlung bei 160 °C bis 220 °C unterzogen wird.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5328949 A
- WO 2003016387 A1
- US 7217751 A
- US 20110086942 A1